(19) **Europäisches Patentamt / European Patent Office / Office européen des brevets**

(11) **EP 1 436 882 B1**

(12) **EUROPEAN PATENT SPECIFICATION**

(45) Date of publication and mention of the grant of the patent:
**20.08.2008 Bulletin 2008/34**

(51) Int Cl.:
**H02K 21/14** *(2006.01)*          *H02K 21/22* *(2006.01)*

(21) Application number: **02780198.4**

(86) International application number:
**PCT/NZ2002/000172**

(22) Date of filing: **06.09.2002**

(87) International publication number:
**WO 2003/021753 (13.03.2003 Gazette 2003/11)**

(54) **A SINGLE PHASE SYNCHRONOUS AC MOTOR**

EINPHASEN-SYNCHRON-WECHSELSTROMMOTOR

MOTEUR MONOPHASE SYNCHRONE A COURANT ALTERNATIF

(84) Designated Contracting States:
**AT BE BG CH CY CZ DE DK EE ES FI FR GB GR IE IT LI LU MC NL PT SE SK TR**

(30) Priority: **06.09.2001 NZ 51402901**
**01.10.2001 NZ 51455001**
**01.05.2002 NZ 51870002**

(43) Date of publication of application:
**14.07.2004 Bulletin 2004/29**

(73) Proprietor: **Strahan, Richard Johnston**
**Christchurch 8004 (NZ)**

(72) Inventor: **Strahan, Richard Johnston**
**Christchurch 8004 (NZ)**

(74) Representative: **Jackson, Richard Eric et al**
**Carpmaels & Ransford**
**43-45 Bloomsbury Square**
**London WC1A 2RA (GB)**

(56) References cited:
**EP-A- 0 696 835          WO-A-97/31422**
**US-A- 4 691 132          US-A- 5 757 100**

- PATENT ABSTRACTS OF JAPAN vol. 2000, no. 07, 29 September 2000 (2000-09-29) -& JP 2000 102283 A (AICHI ELECTRIC CO LTD), 7 April 2000 (2000-04-07)
- PATENT ABSTRACTS OF JAPAN vol. 2000, no. 08, 6 October 2000 (2000-10-06) -& JP 2000 134901 A (AICHI ELECTRIC CO LTD), 12 May 2000 (2000-05-12)

**Description**

Technical Field

The invention relates to single phase synchronous AC electric motors having a stator provided with a winding and a permanent magnet rotor. Permanent magnet reluctance torque is utilised to at least partially cancel the twice electrical frequency torque pulsation characteristic of such motors.

Background Art

All types of single phase AC motors operating on a single energised winding produce a fundamental component of current density distribution described as a standing wave. This standing wave can be resolved into two travelling waves which rotate in opposite directions, allowing a single phase motor to run in either a clockwise or anti-clockwise direction. This applies to both asynchronously (induction) or synchronously running motors. The current-density wave in the opposite direction to the direction of rotation causes a pulsating torque at twice the electrical frequency. This pulsating torque leads to vibration and noise in all types of single phase AC motors.

The addition of a second or auxiliary winding with position and current respectively displaced both in space and time to the first winding eliminates or reduces the backward travelling wave and reinforces the forward wave, emulating a polyphase machine. The time displacement of the current in the second winding may be achieved by the use of a capacitor. The capacitor will in general be sized to minimise the backward travelling wave, and thus minimise the pulsating torque, corresponding to a single value of the load torque. The pulsating torque may be reduced less effectively and less efficiently using an auxiliary winding having a higher resistance to reactance ratio, or by using a shading coil.

Single phase synchronous motors with permanent magnet rotors having an iron laminated stator provided with a single phase winding have characteristics amenable for use in small domestic appliances. These motors usually do not contain an auxiliary winding, capacitor, or shading coils. The advantages of these motors may be summarised as follows:

- Simple low cost construction
- High power output per unit volume
- High reliability and low electromagnetic noise - brushless
- High efficiency due to permanent magnet excitation
- Synchronous speed

Without a means of reducing the backward travelling wave, a large pulsating torque results from the mutual interaction of stator and rotor magnetic fields. The amplitude of the pulsating torque may be larger than the load torque, leading to modulation of the instantaneous speed of the rotor with amplitude between typically 20% to 40% of the synchronous speed. If rotor and stator poles are aligned together no torque is available to start the motor by stator winding energisation. To enable this current torque to act to allow self-starting, a method of misaligning rotor and stator poles is required. However, permanent magnet reluctance or detent torque due to slotting acts to prevent pole misalignment. Asymmetric reluctance variation is commonly employed to overcome this problem by causing a phase shifting of the detent torque due to slots to misalign rotor and stator poles. Prior to winding energisation, the permanent magnet reluctance torque misaligns rotor and stator poles by displacement angle $\gamma$, bringing the rotor to rest at the stable rotor position of zero reluctance torque. The stator airgap is asymmetrically shaped in order to achieve a sufficiently large value of displacement $\gamma$. Upon energisation of the single phase winding, a current torque is produced initiating a starting transient. At an instant at which a suitable combination of states of current, rotor position, and rotor speed are obtained, the rotor proceeds to accelerate to synchronous speed, and must have sufficient acceleration to complete synchronisation within a time period of less than one half of an electrical cycle.

The wider application of this type of motor beyond small domestic appliances is limited by the following characteristics:

1. The moments of inertia of the rotor and load must be low enough to allow synchronisation. This places a maximum and restrictive limit on the rotor diameter, and the power rating.
2. There is no control over the final direction of rotation, unless a mechanical correcting device is used.
3. Frictional torque must be low enough such that the rotor can come to rest at a startable position. The displacement angle $\gamma$ is, in general, limited.
4. It can be difficult to design a stable running motor. Loads with velocity dependent damping are most suitable.
5. The twice electrical frequency torque pulsation can cause vibration and noise problems.

Alternative methods to using an auxiliary winding or shading coils to reduce pulsating torque in single phase synchronous motors with permanent magnet rotors have been proposed. A mechanical method of smoothing out the twice electrical frequency torque pulsation is proposed in US4812691. The electromagnetic torque of a single phase permanent magnet motor is composed of the twice electrical frequency pulsation due to the current torque and the alternating permanent magnet reluctance torque. This electromagnetic torque may be resolved into a DC component and an alternating component at twice the electrical frequency. In US4812691 the alternating component is compensated in phase and amplitude using a mechanical device which acts outside the load transmission path. The device consists of a cam and follower mechanism comprising a cam arranged on the rotor shaft and a cam follower wheel resiliently pressed against the cam. The follower wheel is pressed against the cam by means of a compression spring. Rotation in the backward direction accentuates rather than attenuates the alternating torque requiring an additional mechanical blocking device to only permit forward rotation. This proposal offers solutions to problems 2 to 5 described above. It is possible to provide a net driving torque equal to the load torque at all rotor positions, including the rotor positions of rotor and stator pole alignment where the current torque is zero. However, the entire construction becomes more bulky, more intricate, less efficient and less reliable as a result of the addition of the compensating mechanism.

An alternative electromagnetic method of smoothing out the twice electrical frequency torque pulsation is proposed in GB 1119492. A permanent magnet reluctance torque is used to compensate for the alternating component of the current torque in one direction of rotation. The required phase and amplitude of the reluctance torque is obtained by using an additional permanent magnet mounted on the shaft with its own iron flux return yoke. The implementation also requires that the principal rotor magnet be comprised of two elements which are shifted 90° relative to each other, reducing the useful flux linking the winding by a factor of $\sqrt{2}$. This reduces the motor power. Furthermore, the volume of the additional magnet must be substantial to obtain the required reluctance torque amplitude. The higher overall moment of inertia results in the starting capability of the motor being substantially degraded. The entire construction becomes more bulky and complex as a result of the addition of the compensating mechanism, which effectively constitutes a second motor configuration without a winding.

EP0358806 proposes a single phase permanent magnet motor incorporating a closed stator bore with widening of the airgap in the regions of the stator pole centres. This provides for a displacement angle $\gamma = 90°$ which maximizes the locked rotor torque at the stable reluctance rest position for starting. However, with $\gamma = 90°$, the unstable rest position coincides with the zero current torque position where rotor and stator poles are aligned. Therefore, if a frictional torque is present at this position of pole alignment, no reluctance torque is available to overcome friction to misalign rotor and stator poles to allow starting.

JP10-108450 proposes a device containing a permanent magnet rotor with an elliptical airgap, for use as a generator or stepping motor for small electronic devices such as wristwatches. An aim is to produce a non-sinusoidal reluctance torque to improve generating or stepping motor performance including better efficiency and reliability of the stepping action. The geometrical orientation of the airgap corresponds to either $\gamma = 0°$ or $\gamma = 90°$.

The conference publication 'Design of a single phase synchronous motor with external rotor', C. Koechli, M. Jufer, Incremental Motion Control Systems and Devices, San Francisco, 2000, pp. 33-39, proposes a single phase permanent magnet motor of external rotor type where the stator has a pair of slots for the winding and an airgap asymmetry is provided by a pair of notches on the stator surface. The notches phase-shift the detent or permanent magnet reluctance torque due to the slots. The resulting permanent magnet reluctance torque is used to reduce the current torque pulsation. As will become clear later, the greater the net reluctance torque, the greater the current torque pulsation that can be smoothed. The use of only a localised notch or step like asymmetry prohibits a large reluctance torque being obtained to enable current torque pulsation smoothing at high torque output. Furthermore, at higher values of displacement angle $\gamma$ the stator slots attenuate the net reluctance torque due to cancellation of the fundamental components of the notches and slots. For example, to obtain a net displacement angle of $\gamma = 45°$ using a notch with a displacement of 70° from the slot, the reluctance torque contribution of the notch must be 1.3 times greater than that of the slot. In this case the amplitude of the net reluctance torque is attenuated to only 64% of the notch contribution. This problem worsens for higher values of $\gamma$.
These compounding characteristics limit the torque output at which smooth torque can be obtained with respect to the grade of permanent magnet material or remanent flux density utilised. In addition, as will be described later, to obtain a good ratio of pullout to rated output, a value of $\gamma$ greater than 45° is required. However, as the presence of stator slots make both a high value of net reluctance torque and a high displacement angle $\gamma$ difficult to obtain, both a good pullout ratio and a high rated torque cannot be easily achieved.

JP11-098720 describes an internal rotor motor equivalent to that described above which also uses phase-shifted detent torque due to slots to reduce current torque pulsation, and has similar limitations. In this salient stator pole configuration, the inner diameter of each coil is the same as the width of each stator pole, allowing simple insertion of pre-wound coils onto each pole. However, in small motors winding $I^2R$ loss contributes significantly to reducing efficiency and long end-windings can contribute the greatest proportion of this loss. In this configuration, end-winding loss and copper volume may be reduced by reducing stator pole width but this further restricts displacement angle $\gamma$.

US3,873,897 proposes a brushless DC motor having a permanent magnet rotor in which the airgap is varied over the circumference of the stator in an undulating manner in which the pitch between minimum and maximum airgaps changes to produce a non-sinusoidal reluctance torque which smoothes a pulsed and discontinuous current torque due to a pulsed and discontinuous current The current is fed to a bifilar winding by a DC inverter.

JP2000102283describes a single phase brushless motor which applies the method of discriminating rotor position via differences in magnetic saturation in the iron armature caused by permanent magnet rotor and armature magnetomotive forces (MMF's) either aligning or opposing to respectively either decrease or increase the winding inductance.

JP2000134901 proposes a single phase permanent magnet motor incorporating a closed stator bore with widening of the airgap in the regions of the stator pole centres equivalent to, and also for performing the same rotor positioning function for start-up, as EP0358806.

EP0696835describes a single phase permanent magnet motor incorporating a closed stator bore containing a rotor with widening of the airgap in the regions of the stator pole centres similar to that of describes a single phase permanent magnet motor incorporating a closed stator bore containing a rotor with widening of the airgap in the regions of the stator pole centres similar to that of EP0358806, but also describes various constructions for the rotor comprising permanent magnets and conductive materials.

Disclosure of the Invention

It is an object of the invention to construct a single phase synchronous permanent magnet motor which provides solutions to problems 2-5 described above and to provide both a high torque output and pullout ratio, or to at least provide the public with a useful choice.

According to a first aspect of the invention there is provided a single phase synchronous AC motor including:

a stator having a bore formed therein;

one or more coils forming a single phase winding for generating magnetic

flux within the stator; and

a permanent magnet rotor positioned within the bore, the motor further including means for varying the reluctance between the rotor and the stator with angular position whereby the reluctance varies in such a manner that, in use, the permanent magnet reluctance torque is substantially in anti-phase to the alternating component of the current torque, characterised in that the torque resultant from the superposition of the current torque and the permanent magnet reluctance torque is substantially constant at the rated mechanical local.

Reluctance may be varied either by varying the permeability of the stator in different regions or by varying the air gap between the rotor and the stator with angular position. The stator bore is preferably of a generally elongate form and is symmetrical about minor and major axes so as to modulate both the phase and amplitude of the reluctance torque in a substantial manner. The rotor is or approximates a Halbach magnetized cylinder. The minor axis of the stator bore is preferably offset with respect to the mechanical stator d-axis of the motor by between 15° to 90°. The angle of airgap modulation is preferably between 40° and 180°. The airgap modulation ratio is preferably between 0.1 to 2.

According to a further aspect of the invention there is provided a single phase synchronous AC motor including:

a stator;

one or more coils for generating magnetic flux within the stator; and

a rotor having a bore formed therein to accommodate the stator therewithin and including one or more permanent magnets positioned about the bore forming the rotor poles, the motor further including means for varying the reluctance between the rotor and the stator with angular position whereby the reluctance varyings in such a manner that, in use, the permanent magnet reluctance torque is substantially in anti-phase to the alternating component of the current torque, characterised in that the torque resultant from the superposition of the current torque and the permanent magnet reluctance torque is substantially constant at the rated mechanical load.

The reluctance may be varied by varying the size of the air gap between the rotor and the stator with angular position or by varying the permeability of the material forming the stator. Where the air gap is varied the stator is preferably generally elongate in cross section and is symmetrical about minor and major axes. The rotor is or approximates a Halbach magnetised cylinder. The major axis of the cross sectional shape of the stator is preferably offset with respect to the mechanical stator d-axis of the motor by between 15° to 90°. The angle of airgap modulation is preferably between 40° and 180°. The airgap modulation ratio is preferably between 0.1 to 2.

Brief Description of the Drawings

Figure 1:     shows a motor according to a first embodiment of the invention.

Figure 2:     shows the motor torque components and resultant torque for a motor according to the invention as well as the current and EMF /torque functions.

Figure 3:     shows an embodiment having a continuously varying airgap in the shape of a limacon.

Figure 4:     shows an embodiment utilising an air gap between stator poles.

Figure 5:     shows an embodiment utilising a stator having portions of different permeability.

Figure 6:     shows a motor according to a further embodiment.

Figure 7:     shows a motor according to a still further embodiment.

Figure 8:     shows a motor having an internal stator and external rotor.

Figure 9:     shows the motor torque components and resultant torque for a motor where the current leads the EMF /torque function, as well as the current and EMF /torque functions.

Figure 10:     shows a motor according to a further embodiment for operation according to the waveforms of Figure 9.

Figure 11:     shows the motor torque components and resultant torque for a motor where the current lags the EMF /torque function, as well as the current and EMF /torque functions.

Figure 12:     shows a motor according to a further embodiment for operation according to the waveforms of Figure 11.

Figure 13:     shows a motor according to a still further embodiment.

Modes for Carrying Out the Invention

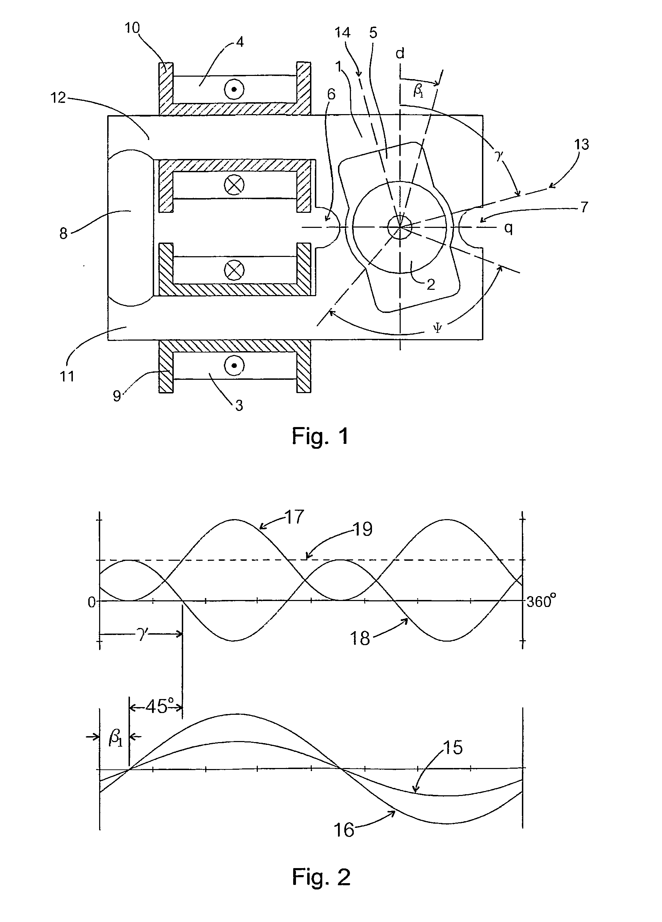

The operation of a motor according to a first embodiment of the invention will now be described with reference to figures 1 and 2. The main components of the motor are stator 1, permanent magnet rotor 2 and single phase winding formed by coils 3 and 4. The bore 5 within which permanent rotor 2 is accommodated is elongate in shape and has a minor axis 13 and a major axis 14. The minor axis of the bore is offset with respect to the mechanical stator d-axis (indicated_by "d") by an angle $\gamma$. Angle $\gamma$ comprises a 45° shift plus an angle $\beta_1$. Saturation bridges 6 and 7 are provided near the mechanical stator q-axis (indicated by "q").

The instantaneous electromagnetic torque of the single phase synchronous permanent magnet motor is described with high accuracy by

$$T_e \;=\; i\frac{d\lambda_m}{d\theta} \;-\; \frac{dW(i=0)}{d\theta} \qquad (1)$$

The first term describes the current torque, due to the mutual coupling between the rotor magnet and the energised single phase winding. This term is a product of the instantaneous winding current, $i$, and a quantity $d\lambda_m/d\theta$. The permanent magnet flux linkage of the single phase winding is denoted by $\lambda_m$ , and its derivative with respect to rotor position is $d\lambda_m/d\theta$, and shall be referred to as the EMF/torque function. The product of the instantaneous angular speed and the EMF/torque function $d\lambda_m/d\theta$ also gives the instantaneous electromotive force (EMF) induced in the winding due to rotor motion. The second torque term gives the permanent magnet reluctance torque, obtained as the derivative of the stored magnetic energy due to the permanent magnet when the winding is de-energised.

Both the current, $i$, and the EMF/torque function $d\lambda_m/d\theta$ are sinusoidal. The motor is designed and mechanically loaded in a manner such that when running, the EMF/torque function 15 (or EMF) and the current 16 are brought into phase with each other as shown in Figure 2. This produces a pulsating current torque 17 of sine squared shape which completes two cycles per electrical cycle. The pulsating torque is smoothed out by a sinusoidal permanent magnet reluctance torque 18 of appropriate phase and amplitude to yield a constant resultant torque 19. To produce a constant torque, the amplitude of the permanent magnet reluctance torque must be set equal to half the peak value of the pulsating current torque. The amplitude of the permanent magnet reluctance torque is also equal to the magnitude of the rated load torque. For constant torque, the phase angle of the reluctance torque is set such that the positive amplitudes of the reluctance torque coincide with the zero crossings of the EMF/torque function or EMF. Therefore at the zero crossings of the EMF/torque function or EMF, rated torque is available although the current torque at these positions is zero. The superposition of the torques in Figure 2 corresponds to rotation in the forward direction. The direction of forward rotation in all cases shall be defined to be that determined by a permanent magnet reluctance torque of positive sign at the zero crossings of the EMF/torque function. For backward rotation, the sign of the pulsating current torque is reversed yielding a superposition of current torque and reluctance torque which accentuates the torque pulsation.

To achieve a simple and compact motor construction, the current torque and the permanent magnet reluctance torque are both produced in the same airgap with the same permanent magnet.

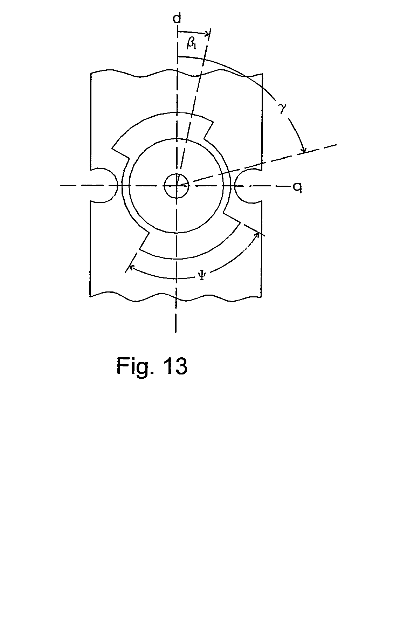

For the 2-pole motor shown in figure 1, the permanent magnet rotor is, or at least approximates, a Halbach magnetised cylinder. In this case, the ideal 2-pole external field Halbach magnetisation is diametrical. For rotors with more than two poles in particular, a Halbach magnetisation may also be approximated using a segmented Halbach cylinder, in which there is at least one segment per pole. To obtain a reluctance torque, the radial airgap length is modulated to modulate the magnetic reluctance. The reluctance torque completes two cycles per electrical cycle, requiring a cycle of airgap modulation per electrical pole pitch. The use of a Halbach magnetised cylindrical rotor ensures that the reluctance torque is essentially sinusoidal. Each cycle of airgap modulation varies in a manner forming distinguishable minor and major axes such that the airgap is generally elongate in cross section. The airgap modulation is preferably symmetrical about both major and minor axes, and may vary continuously or discontinuously. The airgap may be modulated over the entire perimeter, or at least over a significant proportion of the stator bore. Examples of continuous shapes which modulate the entire perimeter are limacons of the form $a + b \, cos(2\theta)$ and ellipses. Figure 1 shows an example in which the airgap is modulated over portions of the bore in a rectangular manner. For each half cycle of airgap modulation, the portion of the stator bore which is modulated is defined by the Airgap Modulation Angle $\Psi$. For the airgap of figure 1, $\Psi$ is approximately 120 degrees, and if $\Psi = 180$ degrees the stator bore becomes a rectangle. Any useful airgap modulation should provide a high permanent magnet flux linkage of the stator winding and also a high reluctance torque. The usefulness of an airgap shape may be assessed by comparing products of the flux linkage and reluctance torque. Airgap modulations similar in shape to that of figure 1 are particularly useful, with values of $\Psi$ between 40 and 180 degrees. Values of $\Psi$ between 70 and 150 degrees are more useful for providing high reluctance torque whilst still providing high flux linkage. Figure 13 shows another example of a useful airgap modulation, in which the single phase winding and stator return yoke are omitted for clarity, where the airgap is modulated over portions of the bore by arcs of fixed radius.

Energisation of the single phase winding yields stator poles of opposing polarity in the periphery of the stator airgap. Slots separating these poles are closed yielding saturation bridges 6 and 7. The closed form of the stator bore permits the orientation of the airgap modulation, and thus the phase of the permanent magnet reluctance torque defined by displacement angle $\gamma$, to be simply adjusted to any arbitrary value. No phase-shifting of detent torque due to slots is required.

The stator may be made of laminated steel or like media. However, other media suitable for conducting magnetic flux such as soft magnetic composite may also be used.

For a motor of small size and low output power connected to the mains supply, a single phase winding consisting of thousands of turns may be required. To simplify manufacture, the bobbins 9 and 10 carrying the single phase winding are wound prior to assembly. The stator lamination forms open limbs 11 and 12 at one end allowing the bobbins 9 and 10 to be inserted onto the stator limbs 11 and 12. The magnetic circuit is then closed by insertion of a laminated return yoke 8 between the stator limbs. The laminated return yoke 8 may be implemented in various shapes and be affixed in various ways in a manner which bridges the open limbs 11 and 12. The saturation bridges 6 and 7 also provide mechanical support for the stator limbs.

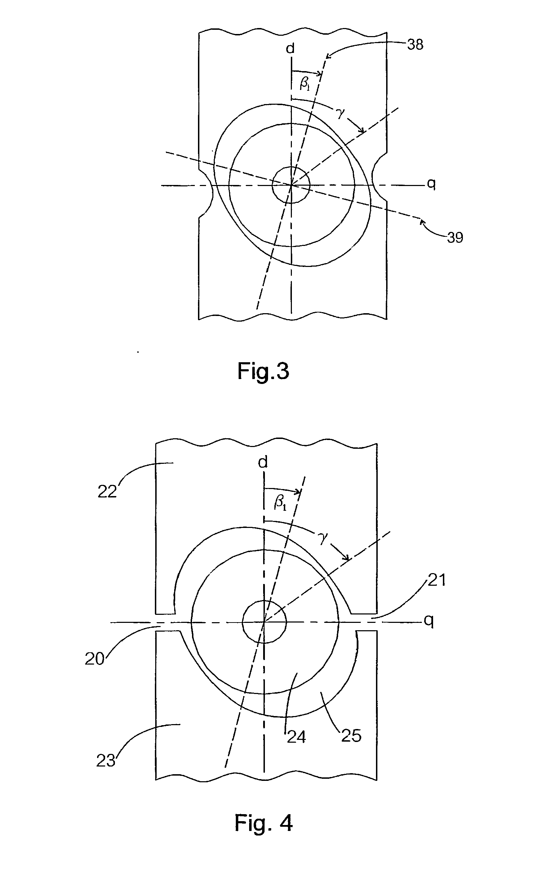

Rotor position and phase angles are referenced from the mechanical stator d-axis, (indicated by "d") which is in turn referenced to the mechanical stator q-axis (indicated by "q") according to a 90 electrical degree displacement. The mechanical stator q-axis, in turn, is determined by the line connecting points marking the narrowest sections of the saturating bridges at their intersections with the edge of the stator bore. The centres of the semi-circular cavities which form the shape of the saturation bridges are located so as to create a symmetrical narrowing of each saturation bridge about the mechanical stator q-axis, which may result in one semi-circular cavity having a centre below the mechanical stator q-axis and the other above as shown for the limaconic airgap of figure 3. In figure 3 the single phase winding and stator return yoke are omitted to emphasize the stator and rotor shapes.

As the current is raised from zero, the saturation bridges are quickly magnetically saturated by the stator field, preventing permanent magnet flux from short-circuiting the single phase winding. The current is predominantly responsible for this saturation.

Rotor rotation with the single phase winding de-energised or open circuited yields an open circuit EMF of non-sinusoidal shape. Under stator winding energisation, the closed circuit EMF due to rotor rotation is sinusoidal and has a larger fundamental amplitude than the open circuit EMF, due to saturation of the saturation bridges.

The amplitude and orientation of the airgap modulation also affects the EMF and the EMF/torque function. The airgap modulation does not affect the sinusoidal shape of the closed circuit EMF and EMF/torque function, but does introduce a phase lag $\beta_1$ to the fundamental component of the closed circuit EMF and EMF/torque function 15 as shown in figure 2. The result of this phase lag is to displace electrical axes from mechanical axes. With reference to figure 3, in which the forward direction of rotation is clockwise, fundamental closed circuit EMF and EMF/torque function then cross zero at an electrical stator d-axis 38 lagging the mechanical stator d-axis by angle $\beta_1$. Electrical stator q-axis 39 similarly lags the mechanical stator q-axis by angle $\beta_1$. Fundamental permanent magnet flux linkage also peaks at rotor angle $\theta = \beta_1$.

In Figure 2 the displacement angle $\gamma$ corresponds to the rotor position where the reluctance torque crosses zero at a stable rest position. To obtain constant torque, the phase angle between the zero crossing of the closed circuit EMF/torque function and the stable rest position of the reluctance torque is 45 electrical degrees. This 45 degree phase relationship is reduced by phase lag $\beta_1$ due to the airgap modulation. This causes torque ripple. The 45 electrical degree phase relationship may be re-established by increasing or compensating the airgap orientation, or displacement angle $\gamma$, such that

$$\gamma - \beta_1 = 45 \text{ electrical degrees} \qquad (2)$$

The phase lag $\beta_1$ varies in a quasi-sinusoidal manner, crossing zero at airgap orientations of $\gamma = 0°$ and $\gamma = 90°$. The correct value of $\gamma$ is obtained by iterative solution. A reasonably accurate solution is obtained from the first iteration:

$$\gamma' = 45° + \beta_1(\gamma = 45°) \qquad (3)$$

For a correct solution, the range of $\beta_1$ is typically from 3 to 20 electrical degrees, yielding a correct solution for $\gamma$ in the range of 48 to 65 electrical degrees, depending on the amplitude of the airgap modulation. Useful results can still be obtained for values of $\gamma$ between 45 to 70°, although best effects are achieved for values of $\gamma$ between 50 to 60°.

For all single phase synchronous permanent magnet motors, prior to starting the permanent magnet reluctance torque must be sufficiently high at the position of rotor and stator pole alignment to overcome friction to move the rotor to a startable position where the current torque is not zero. For the invention, at the equivalent position of rotor and stator electrical pole alignment, where the current torque is zero, the reluctance torque is equal to its amplitude $T_r$, thereby providing the maximum displacing torque possible. Furthermore, the magnitude of the displacing torque is large, being equal to the rated load torque.

Stator winding inductance falls rapidly as the current is initially increased from zero due to saturation of the saturation bridges. This causes a modulation of the inductance over an electrical cycle. During connection to an AC supply, the inductance modulation produces third harmonic current. The third harmonic current creates torque ripple. However, torque quality remains high. For a motor small enough to synchronise by direct connection to the AC supply, the amplitude of the speed modulation is reduced to less than 2% of the synchronous speed. All internal voltages are ideally sinusoidal making the invention amenable for connection to a sinusoidal voltage supply. The number of single phase winding turns are specified such that the closed circuit EMF and current are in phase at the rated load. The amplitude of the reluctance torque is sized to match the rated load.

Under direct connection to an AC supply, the direction of rotation may be self-correcting to the forward direction. If a significant proportion of the load torque is speed dependent, and if the ratio of the amplitude of the permanent magnet reluctance torque to total inertial moment is sufficiently high, the direction of rotation is self-correcting. To be self-correcting, a greater constraint is placed on the maximum inertial moment than for a conventional design for self-starting by direct connection to an AC supply. A self-correcting design will therefore be smaller than a conventional design. The self-correcting capability is enhanced by increasing the remanence of the permanent magnet material, by increasing the number of poles, and by decreasing the rotor diameter.

Inclusion of the self-correcting capability thus enables the invention to solve problems 2 to 5 described earlier.

For a design which is too large to self-correct its direction of rotation, but is small enough to self-start and synchronise upon direct connection to an AC supply, synchronisation in the backward direction is statistically preferred for a random distribution of supply voltage switch-on angles. This requires the load to have a capability to obstruct rotation in the backward direction, or for a mechanical device to be used to block backward rotation. Applications for which the invention may be used include dry rotary shavers and hot water circulation pumps for domestic central heating.

For single phase induction motors of the run capacitor type, the backward travelling wave is ideally eliminated at the rated value of load, minimising torque pulsation. In an analogous manner, the invention eliminates torque pulsation at the rated load. Similarly, torque ripple increases as the load is increased beyond rated load, or as the load decreases towards no load. The size of the motor may be increased beyond that by which self-starting by direct connection to an AC supply is possible, by including an electronic starting circuit. An example of a low cost starting circuit which enables synchronisation to occur for higher moments of rotor and load inertia is composed of a Hall sensor for rotor position detection, and a triac connected in series with the AC supply and the motor for direct AC to AC frequency conversion. This allows a single phase AC motor solution to be realised of simple construction, having low vibration and noise, and high efficiency, intended for use in a variety of applications in which single phase induction motors are used. An example of a higher cost starting circuit is one in which the triac is replaced with a single phase inverter, which may also provide enhanced torque-speed control.

Constant torque solutions across all rotor positions also exist for values of mechanical load torque $T_l$ which are less than the amplitude of the permanent magnet reluctance torque $T_r$. In general, constant torque solutions exist for values of rated load torque such that

$$T_l = k\,T_r \qquad \text{where } 0 \le k \le 1 \qquad (4)$$

The $k = 1$ solution identifies the embodiment described up to this point, in which the current and EMF/torque function are in phase, as shown in Figure 2. In general, for constant torque, the instantaneous electromagnetic torque of the single phase synchronous permanent magnet motor is equal to a constant load torque:

$$i\frac{d\lambda_m}{d\theta} - \frac{dW(i=0)}{d\theta} = T_l \qquad (5)$$

By ignoring the phase shift $\beta_1$ due to the airgap modulation, the closed circuit EMF/torque function, $d\lambda_m/d\theta$, is described with accuracy by

$$\frac{d\lambda_m}{d\theta} = p\lambda_m \sin(p\theta) \qquad (6)$$

where

$p$ = number of pole pairs
$\lambda_m$ = amplitude of the permanent magnet flux linkage
$\theta$ = rotor angle in mechanical degrees referenced from the stator mechanical d-axis

The sinusoidal permanent magnet reluctance torque is described by

$$-\frac{dW(i=0)}{d\theta} = -T_r \sin[2p(\theta - \delta)] \qquad (7)$$

where δ = uncompensated permanent magnet reluctance displacement angle

The current waveform required to obtain constant torque is found by substitution of equations (4), (6), and (7) into (5):

$$i \ = \ \frac{T_r\left\{k+\sin\left[2p\left(\theta-\delta\right)\right]\right\}}{p\lambda_m\sin(p\theta)} \qquad (8)$$

To obtain a finite current waveform

$$k = \sin(2p\delta) \qquad (9)$$

Then for every value of $k$, two solutions exist as permissible values of displacement angle δ:

$$p\delta_1 = \frac{\arcsin(k)}{2} \qquad (10) \qquad\qquad p\delta_2 = 90° - p\delta_1 \qquad (11)$$

where arcsin($k$) is evaluated in the first quadrant of the sine function. Substitution of (9) into (8) yields

$$i \ = \ \frac{2T_r}{p\lambda_m}\cos\left[p\left(\theta-2\delta\right)\right] \qquad (12)$$

Equation (12) shows that constant torque may be obtained in all cases using a sinusoidal current. The phase angle of the current is determined by the value of displacement angle or airgap orientation δ. The airgap orientation in turn is a function of the value of $k$.

For synchronous motion, the closed circuit EMF is obtained by multiplying the EMF/torque function given by equation (6) by the mechanical angular speed $\omega_e/p$. By comparing equations (6) and (12), the phase difference between peak EMF $e_{pk}$ and peak current $i_{pk}$ is given by

$$\sigma = 90° - 2p\delta \qquad (13)$$

Phaser quantities may be referenced to the terminal voltage. The terminal voltage expressed as a function of time $t$ is

$$v = v_{pk}\sin(\omega_e t) \qquad (14)$$

and the phase angle between $v_{pk}$ and $e_{pk}$ is defined by load angle $\theta_o$. The phase angle between $v_{pk}$ and $i_{pk}$ is therefore

$$\varphi = \theta_o + \sigma \qquad (15)$$

The terminal voltage may then be constructed from resistive, inductive and EMF voltages. The constant torque solutions are categorised as follows. For k = 1, the uncompensated displacement angles given by equations (10) and (11) yield a single solution of $\delta_1 = \delta_2 = 45°$ electrical. Equation (13) shows that for this case, $e_{pk}$ and $i_{pk}$, or their respective RMS phaser values $E$ and $I$, are in phase as described earlier. This solution is shown in Table 1. A set of constant torque solutions exists for $0 \leq k < 1$ corresponding to uncompensated displacement angle $\delta_1$ according to equation (10). The solution range for $\delta_1$ is shown in Table 1. Equation (13) shows that for the range of $\delta_1$, the current $I$ leads the EMF $E$. A third solution set of constant torque solutions exists for $0 \leq k < 1$ corresponding to uncompensated displacement angle $\delta_2$ according to equation (11). The solution range for $\delta_2$ is also shown in Table 1, and is characterised by $I$ lagging $E$.

**Table 1** Constant torque solution sets (all angles in electrical degrees)

| $k$ | $\delta$ | characterised by | $\beta_1$ | $\gamma$ |
|---|---|---|---|---|
| $0 \leq k < 1$ | $0 \leq \delta_1 < 45°$ | $I$ leading $E$ | 0-25° | 0°-70° |
| 1 | $\delta_1 = \delta_2 = 45°$ | $I$ & $E$ in phase | 0-25° | 45°-70° |
| $0 \leq k < 1$ | $45° < \delta_2 \leq 90°$ | $I$ lagging $E$ | 0-25° | 45°-90° |

As described earlier for the k = 1 solution, to obtain constant torque, the phase angle between the zero crossing of the closed circuit EMF/torque function and the stable rest position of the reluctance torque is $\delta = 45°$ electrical. Similarly, for all solutions in general, to obtain constant torque, the phase angle between the zero crossing of the closed circuit EMF/torque function, and the stable rest position of the reluctance torque is required to be $\delta$ electrical degrees. The $\delta$ phase relationship is in general reduced by phase lag $\beta_1$ due to the airgap modulation, which creates torque ripple. In a manner analogous to that described earlier, the $\delta$ phase relationship may be re-established by increasing or compensating the airgap orientation to displacement angle $\gamma$, such that

$$\gamma - \beta_1 = \delta \text{ electrical degrees} \qquad (16)$$

Phase lag $\beta_1$ is a function of $\gamma$ and the amplitude and shape of the airgap modulation. The correct value of $\gamma$ is obtained by iterative solution. A reasonably accurate solution is obtained from the first iteration:

$$\gamma' = \delta + \beta_1(\gamma = \delta) \qquad (17)$$

For a correct solution, the range of $\beta_1$ is typically from 3 to 20 electrical degrees, but may extend from 0 to 25°. The latter $\beta_1$ range is included in each constant torque solution set in Table 1 to obtain the compensated displacement angle $\gamma$ ranges. The $\gamma$ value defines the physical orientation of the airgap. Values for $\beta_1$ are typically larger for constant torque solutions in the range of $0.75 < k \leq 1$.

The $I$ leading $E$ solution specified by $k = 0$, $\delta_1 = 0$, and thus $\gamma = 0$ allows no self-starting capability as the stable rest position coincides with rotor and stator pole alignment.

For the $I$ lagging $E$ solution specified by $k = 0$, $\delta_2 = 90°$, and thus $\gamma = 90°$, the unstable rest position coincides with rotor and stator pole alignment and the presence of frictional torque may prevent self-starting. Therefore constant torque solutions near $\gamma = 0$ or $\gamma = 90°$ should generally be avoided to permit self-starting. Running characteristics are identical in either direction of rotation for these two solutions.

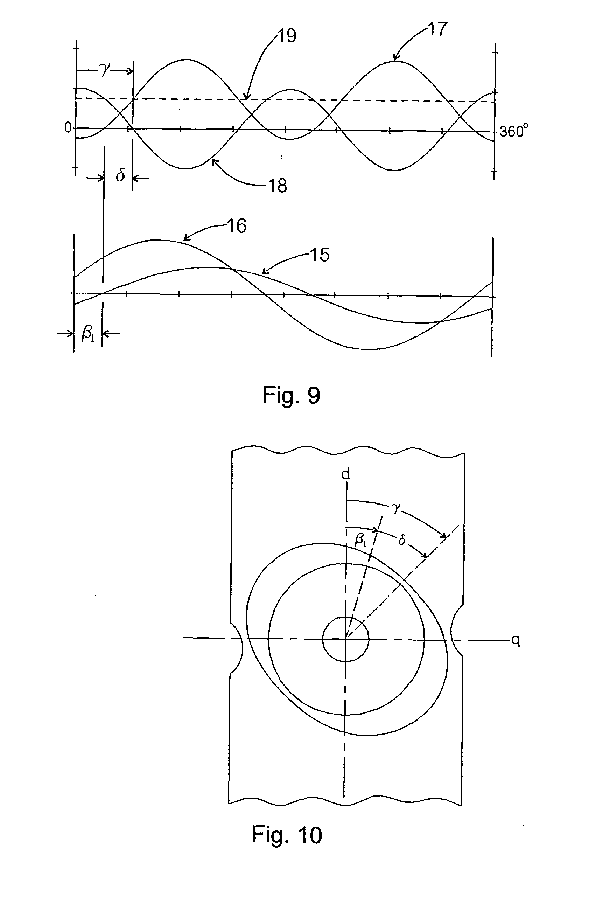

Constant torque solutions for the example of $k = 0.75$ are demonstrated as follows. For the $I$ leading $E$ solution, $k = 0.75$ yields $\delta_1 = 24.3°$. Application of equation (13) shows that $I$ leads $E$ by $\sigma = 41.4°$. This phase shift is shown in Figure 9 where the current 16 leads the EMF/torque function 15 by $\sigma = 41.4°$. This produces a pulsating current torque 17 of sine squared shape having portions contributing negative torque. The superposition of the reluctance torque 18 at the appropriate phase angle given by $\gamma = \delta_1 + \beta_1$ yields a constant resultant torque 19 at 75% of the permanent magnet reluctance torque amplitude.

Embodiments of solutions for k < 1 are geometrically identical to those for k = 1 such as illustrated by Figures 1 and 3, except that the orientation of the airgap may differ. Figure 10 shows an embodiment having operating waveforms as shown in Figure 9 in which the single phase winding and stator return yoke are omitted to emphasize the essential features.

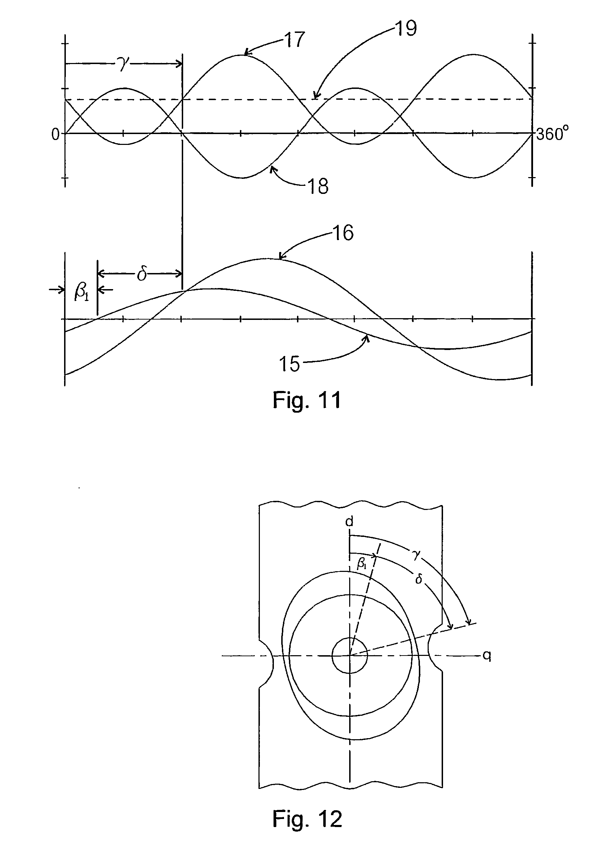

For the $I$ lagging $E$ solution, $k = 0.75$ yields $\delta_2 = 65.7°$, and application of equation (13) shows that $I$ lags $E$ by $\sigma = 41.4°$. This phase lag is shown in Figure 11, where current 16 lags the EMF/torque function 15. The superposition of torques yields a constant resultant torque 19 at 75% of the reluctance torque 18 amplitude. Figure 12 shows an embodiment having operating waveforms as shown in Figure 11 in which the winding and the stator return yoke are omitted to emphasize the essential features.

In all cases, pullout torque occurs at an angle where $I$ leads $E$. No load occurs when $I$ lags $E$ by 90°. Thus for $I$ lagging $E$ solutions the pullout ratio as defined as the ratio of pullout torque to rated (constant) torque may be high. $I$ lagging $E$ solutions are characterised by high values of displacement angle $\gamma$ above 45° as shown in Table 1. Regardless of the elongate shape of the airgap, the permanent magnet flux linkage remains essentially constant for all values of the airgap orientation given by $\gamma$. The lack of attenuation of flux linkage over high values of $\gamma$ allows for feasible $I$ lagging $E$ solutions. These allow for pullout ratios to be obtained equivalent to the breakdown over rated torque ratios of induction motors. This is important where the invention is connected to an AC supply of fixed voltage, as a good pullout ratio allows the motor to cope with load variations expected in domestic use. The locked rotor current may also tend to be higher which may improve starting capability. $I$ leading $E$ solutions are characterised by low values of displacement angle $\gamma$ as shown in Table 1. It may be possible to implement such solutions using conventional slot detent torque phase-shifting motor designs as the required values of $\gamma$ are low. The pullout ratio is lower. Depending on motor parameters, a threshold level of k and thus $\gamma$ may exist below which $I$ leading $E$ solutions are not realisable because the rated load angle exceeds the pullout load angle. Efficiency below rated load may be higher.

For all solutions, permanent magnet flux linkage amplitude $\lambda_m$ may remain competitive in comparison to a conventional design having a slotted circular bore, such that power output and efficiency are not unduly affected.

Useful solutions must provide a balance between pullout ratio, output, and efficiency. With regard to the characteristics described above, balanced solutions should avoid having low $k$ values, and should tend to have values of $k$ towards unity. The $k = 1$ solution best utilises the permanent magnet reluctance torque available providing maximum rated torque.

Table 2 describes useful ranges of parameters for each of the three solution sets.

**Table 2** Useful constant torque solutions

| $k$ | $\delta$ | characterised by | $\beta_1$ | $\gamma$ |
|---|---|---|---|---|
| $0.5 \leq k < 1$ | $15° \leq \delta_1 < 45°$ | $I$ leading $E$ | 0-25° | 15°- 70° |
| 1 | $\delta_1 = \delta_2 = 45°$ | $I$ & $E$ in phase | 0-25° | 45°- 70° |
| $0.5 \leq k < 1$ | $45° < \delta_2 \leq 75°$ | $I$ lagging $E$ | 0-25° | 45°- 90° |

Table 3 describes preferred ranges of parameters.

**Table 3** Preferred constant torque solutions

| $k$ | $\delta$ | characterised by | $\beta_1$ | $\gamma$ |
|---|---|---|---|---|
| $0.7 \leq k < 1$ | $22° \leq \delta_1 < 45°$ | $I$ leading $E$ | 0-20° | 22°- 65° |
| 1 | $\delta_1 = \delta_2 = 45°$ | $I$ & $E$ in phase | 0-20° | 45°- 65° |
| $0.7 \leq k < 1$ | $45° < \delta_2 \leq 67°$ | $I$ lagging $E$ | 0-20° | 45°- 87° |

Useful ranges of airgap modulation are described in Table 4 according to the following definition:

$$\text{Airgap Modulation Ratio (AMR)} = (\text{radial airgap length} - \text{airgap clearance})/(\text{magnet outer radius} - \text{magnet inner radius}) \quad (18)$$

The airgap modulation ratio is measured along the major axis.

**Table 4** Airgap Modulation Ratios

| | AMR |
|---|---|
| useful range | 0.1-2 |
| preferred range | 0.3-1 |

If low grade permanent magnet materials such as ferrite are used, the torque per unit rotor volume (TRV) that may be obtained at which constant torque occurs is typically between 2 to 10 kNm/m$^3$, and more typically between 3 to 8 kNm/m$^3$.

Figure 4 shows a variation to the stator construction shown in Figure 3 in which air gaps 20 and 21 are provided between stator poles 22 and 23. Rotor 24 is positioned within bore 25 having an elongate shape. Short airgaps 20 and 21 reduce inductance variation with respect to current to reduce torque ripple. These airgaps are kept small to ensure that the reluctance torque is not unduly affected.

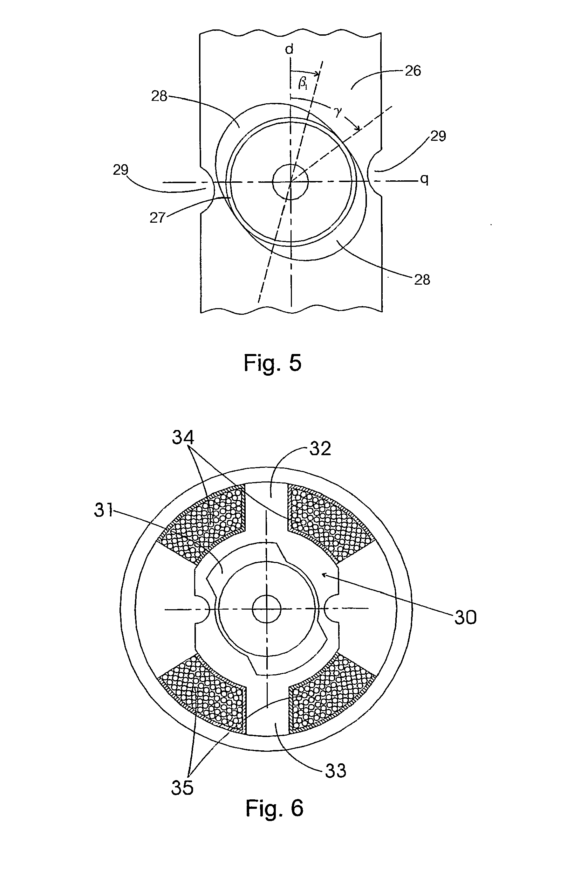

Referring now to figure 5 a further variant of the embodiment shown in figure 3 is shown. In this case the stator is formed of materials having different permeabilities rather than modulating the shape of the airgap. Stator 26 has a circular bore 27 provided therein but regions 28 of stator 26 have a different permeability to the rest of stator 26 to produce the required modulation of the reluctance torque. Cavities 29 may also contain materials having different permeability to that of stator 26.

Figure 6 illustrates another embodiment in which the laminated stator 30 is assembled from a stator pole part having a stator bore 31 and radial pole necks 32 and 33 provided for accommodating stator coils 34 and 35. An annular return yoke 36 provides a return flux path.

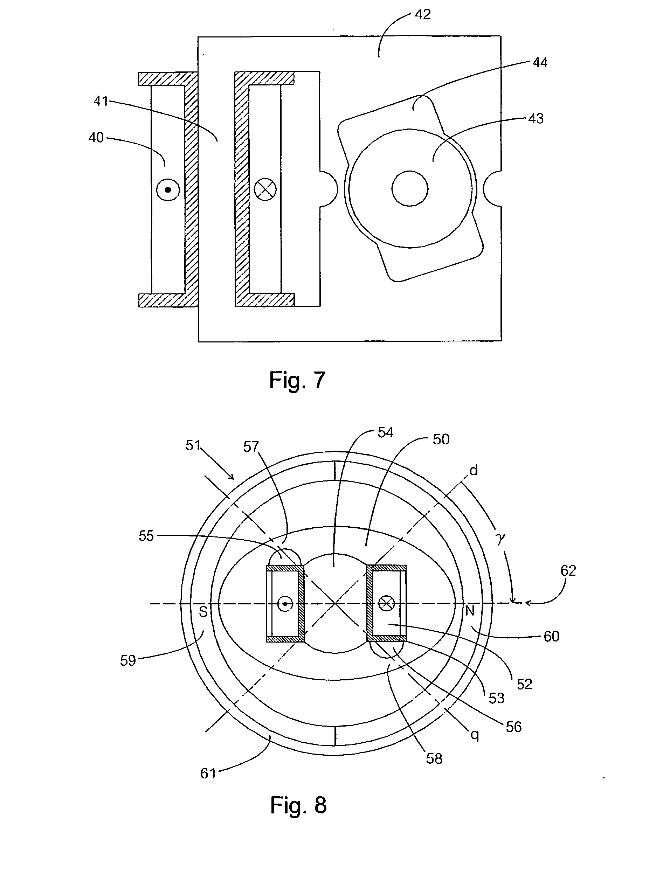

Referring now to figure 8 an inverted motor design is shown. In this case stator 50 is provided on the inside and rotor 51 rotates about it. The single phase winding is in the form of a single coil 52 wound about a bobbin 53. Bobbin 53 is mounted upon return yoke 54. Cavities 55 and 56 are provided to form saturation bridges 57 and 58.

In this case, rather than modulating an aperture within the stator the external shape of the stator is generally elongate forming a minor axis and a major axis 62. This produces an air gap between the stator and rotor which provides the required modulation of the reluctance torque. The external shape of the stator is preferably symmetrical about both major and minor axes, and may vary continuously or discontinuously. The stator surface may be modulated over the entire perimeter, or at least over a significant proportion. Rotor 51 is in the form of permanent magnets 59 and 60 within rotor return yoke 61. The rotor magnetisation is ideally a Halbach magnetisation of the internal field type. This design may be suitable for use in fans etc.

Figure 7 shows an embodiment similar to the embodiment shown in figure 1 except that the single phase winding is in the form of a single coil 40 provided on the return yoke path 41 of stator 42. A permanent magnet rotor 43 is provided within a bore 44 of substantially elongate shape as in the embodiment of figure 1.

For the various stator designs various permutations regarding the placement of the single phase winding coils and laminated return yoke design are possible. The rotor may consist of one or more magnets mounted on a shaft, or may consist of one of more magnets mounted on an iron or soft magnetic yoke.

The methods of synchronisation and controlling the direction of rotation described earlier for the $k = 1$ solution of the invention are also applicable to $k$ solutions which are less than one. However, for motors which are small, the self-correcting or uni-directional capability decreases as $k$ decreases to $k = 0$, where the solutions are bi-directional.

Although the invention is illustrated in the above embodiments incorporating two poles it will be appreciated that implementations incorporating more than two poles would be readily apparent to one skilled in the art and are incorporated within the present invention.

There is thus provided a single phase AC motor capable of generating a sinusoidal permanent magnet reluctance torque of both large amplitude and phase displacement. Using low grade permanent magnet materials such as ferrite at AC mains supply frequency, the motor achieves a large reluctance torque to enable constant torque at output power levels which may be competitive in comparison to conventional single phase AC motors, such as induction motors. Values of torque per unit rotor volume and airgap shear stress at constant torque may be achieved which are similar to those of conventional motors of similar size and material use. The motor produces a reluctance torque of large enough phase to achieve a useful pullout ratio in comparison to the breakdown to rated torque ratios of single phase induction motors. This is achieved by employing a symmetrical and elongate airgap to modulate the airgap reluctance, and thus both the reluctance torque amplitude and phase, to greatest effect. In doing this, a solution to overcome the $\beta_1$ phase shift in the EMF created by such a large airgap modulation is also provided. The placement of coils on separate stator limbs allows simple application of high numbers of turns if required for use at mains supply voltage. The placement of coils on separate limbs also allows end-winding spans to be minimized, thereby minimizing copper usage and maximizing motor efficiency.

The present invention thus provides a single phase synchronous AC motor of simple, compact and low cost construction having high efficiency and low vibration and noise. The motor delivers substantially constant output torque for any rotor position which facilitates easy starting of the motor. The motor direction of rotation is also self correcting for small motor size and so does not require additional components to control motor direction. The motor also has high reliability and low electromagnetic noise. The motor may be designed to achieve a desired pullout ratio for a chosen application.

**Claims**

1. A single phase synchronous AC motor including:

a stator (1) having a bore (5) formed therein;
one or more coils (3, 4) forming a single phase winding for generating magnetic flux within the stator (1); and
a permanent magnet rotor (2) positioned within the bore (5), the motor further including means for varying the reluctance between the rotor (2) and the stator (1) with angular position, whereby
the reluctance varies in such a manner that, in use, the permanent magnet reluctance torque is substantially in anti-phase to the alternating component of the current torque, **characterised in that**: the torque resultant from the superposition of the current torque and the permanent magnet reluctance torque is substantially constant at the rated mechanical load.

2. A motor as claimed in claim 1 wherein the variation in reluctance with angular position is achieved by modulating the radius of the bore (5) such that the bore (5) is generally symmetrical about minor and major axes.

3. A motor as claimed in claim 1 or claim 2 wherein the variation in reluctance with angular position is achieved by modulating the radius of the bore (5) over a substantial proportion of the perimeter of the bore (5), preferably over substantially the entire perimeter of the bore (5).

4. A motor as claimed in any one of the preceding claims wherein the stator bore (5) is elongate.

5. A motor as claimed in any one of the preceding claims wherein the stator bore (5) includes a region of generally rectangular cross section along the axis of the bore (5).

6. A motor as claimed in any one of the preceding claims wherein the minor axis of the stator bore (5) is offset with respect to the mechanical stator d-axis of the motor by between 15 to 90°, preferably 45 to 87°, more preferably 45 to 70°, most preferably 50 to 60°.

7. A motor as claimed in any one of the preceding claims wherein the one or more coil (3, 4) is located externally to the stator bore (5) such that any slot in the bore (5) or portion of the bore (5) contains no coils or coilsides.

8. A motor as claimed in any one of the preceding claims wherein the stator (1) is in the form of a closed loop having the bore (5) formed in one arm and one or more coil (3, 4) provided on one or more other arm.

9. A motor as claimed in claim 8 wherein saturation bridges (6, 7) are provided in the arms of the stator (1).

10. A single phase synchronous AC motor including:

a stator (50);
one or more coils (52) for generating magnetic flux within the stator (50); and
a rotor (51) having a bore formed therein to accommodate the stator (50) therewithin and including one or more permanent magnets (59, 60) positioned about the bore forming the rotor poles, the motor further including means for varying the reluctance between the rotor (51) and the stator (50) with angular position, whereby
the reluctance varies in such a manner that, in use, the permanent magnet reluctance torque is substantially in anti-phase to the alternating component of the current torque, **characterised in that** the torque resultant from the superposition of the current torque and the permanent magnet reluctance torque is substantially constant at the rated mechanical load.

11. A motor as claimed in claim 10 wherein the variation in reluctance with angular position is achieved by modulating the radius of the stator (50) such that the stator (50) is generally symmetrical about minor and major axes.

12. A motor as claimed in claim 10 or claim 11 wherein a substantial proportion of the surface of the stator (50) adjacent the rotor (51) is modulated to achieve the variation of reluctance with angular position.

13. A motor as claimed in any one of claims 10 to 12 wherein the major axis of the cross sectional shape of the stator (50) is offset with respect to the mechanical stator d-axis of the motor by between 15 to 90°, preferably 45 to 87°, more preferably 45 to 70°, most preferably 50 to 60°.

**14.** A motor as claimed in any one of claims 10 to 13 wherein the one or more coil (52) is located internally to the stator (50) such that any slot in the surface or portion of the surface of the stator (50) contains no coils or coilsides.

**15.** A motor as claimed in any one of the preceding claims wherein the rotor (2, 51) contains permanent magnetic material which forms or approximates a Halbach magnetized cylinder.

**16.** A motor as claimed in any one of the preceding claims wherein the motor includes two or more poles.

**17.** A motor as claimed in claim 1 or claim 10 wherein the permeability of the stator (1,50) is varied to achieve the required modulation of the magnetic reluctance.

**18.** A motor as claimed in any one of the preceding claims including conductors connected to the one or more coils (3, 4, 52) for direct connection to a mains AC supply.

**19.** A motor as claimed in any one of the preceding claims including an AC voltage or power source connected to the one or more coils (3, 4, 52).

**20.** A motor as claimed in claim 19 wherein the AC source is a single phase inverter.

**21.** A motor as claimed in claim 19 wherein the AC source is a direct AC to AC frequency converter.

**Patentansprüche**

**1.** Einphasen-Synchron-Wechselstrommotor mit:

einem Stator (1), in dem eine Bohrung (5) ausgebildet ist;
einer oder mehreren Spulen (3, 4), die eine Einphasenwindung bilden, um einen magnetischen Fluss innerhalb des Stators (1) zu erzeugen; und
einem Permanentmagnetläufer (2), der innerhalb der Bohrung (5) angeordnet ist, wobei der Motor ferner Mittel beinhaltet, um die Reluktanz zwischen dem Läufer (2) und dem Stator (1) mit der Winkelstellung zu verändern, wodurch sich
die Reluktanz derart ändert, dass im Betrieb das Permanentmagnetreluktanzmoment im Wesentlichen gegenphasig zu den Wechselstromanteilen des Strommomentes ist,
**dadurch gekennzeichnet, dass**
das Moment, das sich durch die Überlagerung des Strommomentes und des Permanentmagnetreluktanzmomentes ergibt, bei der mechanischen Nennlast im Wesentlichen konstant ist.

**2.** Motor nach Anspruch 1, wobei die Änderung der Reluktanz mit der Winkelstellung erreicht wird durch Modulieren des Radius der Bohrung (5) derart, dass die Bohrung (5) im Allgemeinen symmetrisch zu Neben- und Hauptachse ist.

**3.** Motor nach Anspruch 1 oder 2, wobei die Änderung der Reluktanz mit der Winkelstellung erreicht wird durch Modulieren des Radius der Bohrung (5) über einen wesentlichen Teil des Umfangs der Bohrung (5), vorzugsweise im Wesentlichen über den gesamten Umfang der Bohrung (5).

**4.** Motor nach einem der vorhergehenden Ansprüche, wobei die Statorbohrung (5) gestreckt ausgebildet ist.

**5.** Motor nach einem der vorhergehenden Ansprüche, wobei die Statorbohrung (5) einen Bereich eines im Allgemeinen rechteckigen Querschnitts entlang der Achse der Bohrung (5) aufweist.

**6.** Motor nach einem der vorhergehenden Ansprüche, wobei die Nebenachse der Statorbohrung (5) relativ zu der mechanischen d-Statorachse des Motors um zwischen 15 bis 90°, bevorzugt 45 bis 87°, besonders bevorzugt 45 bis 70°, ganz besonders bevorzugt 50 bis 60° versetzt ist.

**7.** Motor nach einem der vorhergehenden Ansprüche, wobei eine oder mehrere der Spulen (3, 4) außerhalb der Statorbohrung (5) angeordnet sind, derart, dass keine Aussparung in der Bohrung (5) oder kein Abschnitt der Bohrung (5) Spulen oder Spulenschenkel enthält.

**8.** Motor nach einem der vorhergehenden Ansprüche, wobei der Stator (1) in Form eines geschlossenen Rings gebildet ist, der die Bohrung (5) aufweist, die in einem Schenkel ausgebildet ist, und eine oder mehrere Spulen (3, 4) an einem oder mehreren anderen Schenkeln bereitgestellt sind.

**9.** Motor nach Anspruch 8, wobei Sättigungsbrücken (6, 7) in den Schenkeln des Stators (1) bereitgestellt sind.

**10.** Einphasen-Synchron-Wechselstrommotor mit:

einem Stator (50);
einer oder mehreren Spulen (52), um einen magnetischen Fluss innerhalb des Stators (50) zu erzeugen; und
einem Läufer (51), in dem eine Bohrung ausgebildet ist, um den Stator (50) darin aufzunehmen, und der einen oder mehrere Permanentmagnete (59, 60) beinhaltet, die um die Bohrung herum angeordnet sind und die Läuferpole bilden, wobei der Motor ferner Mittel aufweist, um die Reluktanz zwischen dem Läufer (51) und dem Stator (50) mit der Winkelstellung zu ändern, wodurch
sich die Reluktanz derart ändert, dass im Betrieb das Permanentmagnetreluktanzmoment im Wesentlichen gegenphasig zu dem Wechselstromanteil des Strommomentes ist,
**dadurch gekennzeichnet, dass**
das Moment, das sich durch die Überlagerung des Strommomentes und des Permanentmagnetreluktanzmomentes ergibt, bei der mechanischen Nennlast im Wesentlichen konstant ist.

**11.** Motor nach Anspruch 10, wobei die Änderung der Reluktanz mit der Winkelstellung erreicht wird durch Modulieren des Radius des Stators (50) derart, dass der Stator (50) im Allgemeinen symmetrisch zu Neben- und Hauptachse ist.

**12.** Motor nach Anspruch 10 oder 11, wobei ein wesentlicher Anteil der Oberfläche des Stators (50), die dem Läufer (51) benachbart ist, moduliert ist, um die Änderung der Reluktanz mit der Winkelstellung zu erreichen.

**13.** Motor nach einem der Ansprüche 10 bis 12, wobei die Hauptachse des Querschnittsprofils des Stators (50) relativ zu der mechanischen d-Statorachse des Motors um zwischen 15 bis 90°, bevorzugt 45 bis 87°, besonders bevorzugt 45 bis 70°, ganz besonders bevorzugt 50 bis 60° versetzt ist.

**14.** Motor nach einem der Ansprüche 10 bis 13, wobei eine oder mehrere der Spulen (52) innerhalb des Stators (50) angeordnet sind, derart, dass keine Aussparung in der Oberfläche oder kein Abschnitt der Oberfläche des Stators (50) Spulen oder Spulenschenkel enthält.

**15.** Motor nach einem der vorhergehenden Ansprüche, wobei der Läufer (2, 51) ein Permanentmagnetmaterial enthält, das einen Halbach-Magnet-Zylinder bildet oder annähert.

**16.** Motor nach einem der vorhergehenden Ansprüche, wobei der Motor zwei oder mehr Pole aufweist.

**17.** Motor nach Anspruch 1 oder 10, wobei die Permeabilität des Stators (1, 50) verändert wird, um die erforderliche Modulation der magnetischen Reluktanz zu erreichen.

**18.** Motor nach einem der vorhergehenden Ansprüche, mit elektrischen Leitern, die mit einer oder mehreren der Spulen (3, 4, 52) verbunden sind zur direkten Verbindung mit einer Netzwechselstromversorgung.

**19.** Motor nach einem der vorhergehenden Ansprüche, mit einer Wechselspannungs- oder Leistungsquelle, die mit einer oder mehreren der Spulen (3, 4, 52) verbunden ist.

**20.** Motor nach Anspruch 19, wobei die Wechselstromquelle ein Einphasenwechselrichter ist.

**21.** Motor nach Anspruch 19, wobei die Wechselstromquelle ein direkter Wechselstrom-zu-Wechselstrom-Frequenzwandler ist.

**Revendications**

**1.** Moteur monophasé synchrone à courant alternatif comprenant :

un stator (1) possédant un alésage (5) formé dans celui-ci ;

une ou plusieurs bobines (3, 4) formant un enroulement monophasé pour générer un flux magnétique à l'intérieur du stator (1) ; et

un rotor à aimant permanent (2) positionné à l'intérieur de l'alésage (5), le moteur comprenant en outre des moyens pour varier la réluctance entre le rotor (2) et le stator (1) avec une position angulaire, moyennant quoi la réluctance varie de manière telle que, durant l'utilisation, le couple de réluctance d'aimant permanent soit sensiblement en anti-phase par rapport à la composante alternative du couple de courant, **caractérisé en ce que** le couple résultant de la superposition du couple de courant et du couple de réluctance d'aimant permanent est sensiblement constant à la charge mécanique nominale.

2. Moteur selon la revendication 1, dans lequel la variation de réluctance avec la position angulaire est réalisée en modulant le rayon de l'alésage (5) de sorte que l'alésage (5) soit généralement symétrique sur des petit et grand axes.

3. Moteur selon la revendication 1 ou la revendication 2, dans lequel la variation de réluctance avec la position angulaire est réalisée en modulant le rayon de l'alésage (5) sur une proportion importante du périmètre de l'alésage (5), de préférence sur le périmètre sensiblement entier de l'alésage (5).

4. Moteur selon l'une quelconque des revendications précédentes, dans lequel l'alésage de stator (5) est oblong.

5. Moteur selon l'une quelconque des revendications précédentes, dans lequel l'alésage de stator (5) comprend une région de section transversale sensiblement rectangulaire le long de l'axe de l'alésage (5).

6. Moteur selon l'une quelconque des revendications précédentes, dans lequel le petit axe de l'alésage de stator (5) est décalé par rapport à l'axe d de stator mécanique du moteur selon un angle compris entre 15 et 90°, de préférence entre 45 et 87°, de façon davantage préférée entre 45 et 70°, de façon préférée entre toutes 50 et 60°.

7. Moteur selon l'une quelconque des revendications précédentes, dans lequel la ou les bobines (3, 4) sont positionnées extérieurement de l'alésage de stator (5) de sorte qu'une quelconque fente dans l'alésage (5) ou partie de l'alésage (5) ne contienne aucune bobine ou aucun côté de bobine.

8. Moteur selon l'une quelconque des revendications précédentes, dans lequel le stator (1) présente la forme d'une boucle fermée possédant l'alésage (5) formé dans un bras et la ou les bobines (3, 4) prévues sur un ou plusieurs autres bras.

9. Moteur selon la revendication 8, dans lequel des ponts de saturation (6, 7) sont prévus dans les bras du stator (1).

10. Moteur monophasé synchrone à courant alternatif comprenant :

un stator (50) ;

une ou plusieurs bobines (52) pour générer un flux magnétique à l'intérieur du stator (50) ; et

un rotor (51) possédant un alésage dans celui-ci pour contenir le stator (50) à l'intérieur de celui-ci et comprenant un ou plusieurs aimants permanents (59, 60) positionnés autour de l'alésage formant les pôles de rotor, le moteur comprenant en outre des moyens pour varier la réluctance entre le rotor (51) et le stator (50) avec la position angulaire, moyennant quoi

la réluctance varie de manière telle que, durant l'utilisation, le couple de réluctance d'aimant permanent soit sensiblement en anti-phase par rapport à la composante alternative du couple de courant, **caractérisé en ce que** le couple résultant de la superposition du couple de courant et du couple de réluctance d'aimant permanent est sensiblement constant à la charge mécanique nominale.

11. Moteur selon la revendication 10, dans lequel la variation de réluctance avec la position angulaire est réalisée en modulant le rayon du stator (50) de sorte que le stator (50) soit généralement symétrique sur des petit et grand axes.

12. Moteur selon la revendication 10 ou la revendication 11, dans lequel une proportion importante de la surface du stator (50) à côté du rotor (51) est modulée pour réaliser la variation de réluctance avec la position angulaire.

13. Moteur selon l'une quelconque des revendications 10 à 12, dans lequel le grand axe de la forme de section transversale du stator (50) est décalé par rapport à l'axe d de stator mécanique du moteur selon un angle compris entre 15 et 90°, de préférence entre 45 et 87°, de façon davantage préférée entre 45 et 70°, de façon préférée entre toutes 50 et 60°.

**14.** Moteur selon l'une quelconque des revendications 10 à 13, dans lequel la ou les bobines (52) sont positionnées intérieurement du stator (50) de sorte qu'une quelconque fente dans la surface ou partie de la surface du stator (50) ne contienne aucune bobine ou aucun côté de bobine.

**15.** Moteur selon l'une quelconque des revendications précédentes, dans lequel le rotor (2, 51) contient un matériau magnétique permanent qui forme ou se rapproche d'un cylindre magnétisé de Halbach.

**16.** Moteur selon l'une quelconque des revendications précédentes, dans lequel le moteur comprend deux pôles ou plus.

**17.** Moteur selon la revendication 1 ou la revendication 10, dans lequel la perméabilité du stator (1, 50) est variée pour obtenir la modulation requise de la réluctance magnétique.

**18.** Moteur selon l'une quelconque des revendications précédentes, comprenant des conducteurs connectés à la ou aux bobines (3, 4, 52) pour une connexion directe à une alimentation de secteur de courant alternatif.

**19.** Moteur selon l'une quelconque des revendications précédentes, comprenant une source de courant alternatif ou tension alternative connectée à la ou aux bobines (3, 4, 52).

**20.** Moteur selon la revendication 19, dans lequel la source de courant alternatif est un inverseur monophasé.

**21.** Moteur selon la revendication 19, dans lequel la source de courant alternatif est un convertisseur de fréquence CA/CA direct.

Fig. 1

Fig. 2

Fig.3

Fig. 4

Fig. 5

Fig. 6

**Fig. 7**

**Fig. 8**

Fig. 9

Fig. 10

Fig. 11

Fig. 12

Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4812691 A
- GB 1119492 A
- EP 0358806 A
- JP 10108450 A
- JP 11098720 A
- US 3873897 A
- JP 2000102283 B
- JP 2000134901 B
- EP 0696835 A

### Non-patent literature cited in the description

- Design of a single phase synchronous motor with external rotor. **C. KOECHLI ; M. JUFER.** Incremental Motion Control Systems and Devices. The conference publication, 2000, 33-39